**Europäisches Patentamt**

**European Patent Office**

**Office européen des brevets**

(19)

(11) Veröffentlichungsnummer : **0 091 671**
**B1**

(12) **EUROPÄISCHE PATENTSCHRIFT**

(45) Veröffentlichungstag der Patentschrift :
28.05.86

(51) Int. Cl.⁴ : **B 62 D 1/18**

(21) Anmeldenummer : **83103420.2**

(22) Anmeldetag : **08.04.83**

(54) Sicherheitslenksäule für Kraftfahrzeuge.

(30) Priorität : **10.04.82 DE 3213462**

(43) Veröffentlichungstag der Anmeldung :
**19.10.83 Patentblatt 83/42**

(45) Bekanntmachung des Hinweises auf die Patenterteilung : **28.05.86 Patentblatt 86/22**

(84) Benannte Vertragsstaaten :
**AT CH DE FR GB IT LI**

(56) Entgegenhaltungen :
**EP-A- 0 053 284**
**DE-A- 2 918 280**
**DE-B- 1 655 581**

(73) Patentinhaber : **AUDI AG**
**Postfach 220**
**D-8070 Ingolstadt (DE)**

(72) Erfinder : **Schneeweiss, Manfred**
**Vorwerkstrasse 42**
**D-8071 Wettstetten (DE)**
Erfinder : **Breuer, Norbert**
**An der Wiege 2**
**D-8071 Wettstetten (DE)**
Erfinder : **Schäper, Siegfried, Dr.**
**Am Fort 5**
**D-8071 Wettstetten (DE)**

(74) Vertreter : **Le Vrang, Klaus**
**AUDI AG Postfach 220 Patentabteilung**
**D-8070 Ingolstadt (DE)**

**Beschreibung**

Die Erfindung betrifft eine Sicherheitslenksäule für Kraftfahrzeuge gemäß dem Oberbegriff des Patentanspruches 1.

Eine derartige Sicherheitslenksäule ist durch die DE-A-2 16 55 581 bekannt geworden. Das nachgiebige, gitterartige Rohrteil und der starre Lenksäulenabschnitt sind aus Stahlblech geformt und miteinander verbunden bzw. verschweißt. Eine derartige Konstruktion ist jedoch relativ schwer und beeinflußt somit ungünstig das Leergewicht des Kraftfahrzeuges.

Ferner zeigt die DE-A-29 18 280 eine Stoßdämpfungseinrichtung, bei der als verformbares Teil ein rohrförmiger Körper aus Kunststoff, der in Wickeltechnik hergestellt ist, beschrieben ist. Die Faserorientierung der in diesen Rohrkörper eingebetteten Glas- oder Kevlarfasern beträgt zur Erzielung eines günstigen Verformungsverhaltens +/− 45°.

Aufgabe der Erfindung ist es, eine kostengünstige, funktionssichere Sicherheitslenksäule der gattungsgemäßen Art zu schaffen, welche sich durch ein geringes Gewicht auszeichnet.

Diese Aufgabe wird erfindungsgemäß mit den kennzeichnenden Merkmalen des Patentanspruches 1 gelöst. Durch die einstückige Ausbildung wird neben einem ̄ rationelleren Wickelverfahren die bei einem Crash problematische Verbindung zwischen dem Rohrteil und dem starren Lenksäulenabschnitt vermieden. Die separat gefertigten Auschlußteile können mit der insoweit einstückig gefertigten Lenksäule durch Verkleben oder Verpressen verbunden werden. Insbesondere bei der Verwendung metallischer Anschlußteile ergibt sich daraus der Vorteil, daß auf bereits bewährte Anschlußverbindungen beim Lenkgetriebe und beim Lenkrad zurückgegriffen werden kann.

Durch die Merkmale des Anspruches 2 wird eine mechanisch beständige Drehlagerung der Lenksäule am Lenkrad und gegebenenfalls eine zerstörungsfeste Verankerung für eine Lenkradsperre verwirklicht.

Bei einer Ausbildung des deformierbaren Rohrteiles gemäß Anspruch 3 wird dessen Fertigung bei Erzielung einer gleichbleibenden Festigkeit, insbesondere Drehfestigkeit, vereinfacht. Dabei kann entsprechend Anspruch 4 eine gezielte Verminderung der Biegesteifigkeit gegebenenfalls zur Einsparung eines geringe Winkelabweichungen kompensierenden Gelenkes (z. B. Hardischeibe) hergestellt werden. Die gelenkartige Nachgiebigkeit kann durch eine wellförmige Ausbildung des Rohrstückes mit vielen radial verlaufenden Wandabschnitten oder durch eine einzige, balgartige Erweiterung des Rohrstückes mit zwei größeren, radial verlaufenden Wandabschnitten erreicht werden.

Ein besonders vorteilhaftes, Energie aufnehmendes Crash-Verhalten der Sicherheitslenksäule kann mit den Merkmalen des Anspruches 5 erzielt werden. Der Einsatz kann ein relativ leichtes, gezielt deformierbares Rohrteil aus Metall, ein Kunststoffschaum oder eine andere, energieverzehrende Masse sein.

Besonders vorteilhaft kann gemäß den Merkmalen des Patentanspruches 6 der Einsatz durch einen beim Wickeln der Lenksäule verwendeten Kern gebildet sein. Der Kern, der beispielsweise aus Polyurethan-Hartschaum bestehen kann, dient einerseits zur Fertigung der Lenksäule und zugleich als weitere Funktion zu deren besseren Deformierungsverhalten.

Durch die Merkmale des Anspruches 7 kann eine besonders feste, haltbare Verbindung zwischen den Anschlußteilen und der Lenksäule erreicht werden. Die Ausnehmungen für eine Lenkradsperre können jedoch auch unmittelbar in den starren Lenksäulenabschnitt eingearbeitet sein, wobei nach Anspruch 8 vorteilhaft um diese Ausnehmungen Verstärkungen aus Geweben mit gerichteten Fasern oder in Wickeltechnik aufgebrachte Fasern vorgesehen sind. In kostengünstiger Weise kann entsprechend Anspruch 9 eine elektrisch leitende Verbindung (Metallfasern, Kohlenstoffasern etc.) zwischen den Anschlußteilen vorgesehen sein, um beispielsweise eine Adaption des Lenkrades an das elektrische Bordnetz des Kraftfahrzeuges zu vereinfachen.

Gemäß Anspruch 10 können Lagerstellen der aus Kunststoff bestehenden Lenksäule mit einer Gleitschicht versehen sein, welche eine unmittelbare Lagerung der Lenksäule in einer Lenkkonsole oder in einem Lenküberrohr ermöglicht.

Ein Ausführungsbeispiel der Erfindung ist im folgenden mit weiteren Einzelheiten näher erläutert. Die Zeichnung zeigt in

Figur 1 eine erfindungsgemäße Sicherheitslenksäule in einem Kraftfahrzeug in schematischer Darstellung und

Figur 2 die Lenksäule nach Fig. 1 im Längsschnitt mit verschiedenen Ausführungsmöglichkeiten.

Die Sicherheitslenksäule 2 setzt sich aus einem starren Lenksäulenabschnitt 4 und einem im Durchmesser größerem Rohrteil 6 mit einer Gitterstruktur zusammen. Die einzelnen Stege 6a der Gitterstruktur sind in einem Winkel von +/− 55° zur Längsachse der Lenksäule 2 ausgerichtet und bilden zwischen sich rhombenförmige Zwischenräume 8. Die beschriebene Gitterstruktur sichert eine ausreichende Verdrehfestigkeit des Rohrteiles 6 bei einer relativ geringen Steifigkeit in axialer Richtung.

In die Lenksäule 2 sind an deren freie, rohrförmige Enden Anschlußteile 10, 12 aus Stahl fest eingesetzt. Das Anschlußteil 12 ist mittels einer nicht dargestellten Vielkeilverbindung und einer Klemmschelle mit einer Antriebswelle 14 eines Lenkgetriebes 16 verbunden.

Das Anschlußteil 10 ist über ein Kugellager 18 in einer ortsfesten Lenkkonsole 20 drehbar und axial unverschiebbar gelagert. Ferner ist das Anschlußteil 10 mit langlochförmigen Ausnehmungen 22 versehen, in die bei eingeschalteter Lenkradsperre ein federbelasteter Stift 24 eines nicht dargestellten Lenkradschlosses eingreift. Am freien Ende des Anschlußteiles 10 ist ebenfalls über eine Vielkeilverbindung ein Lenkrad 26 befestigt.

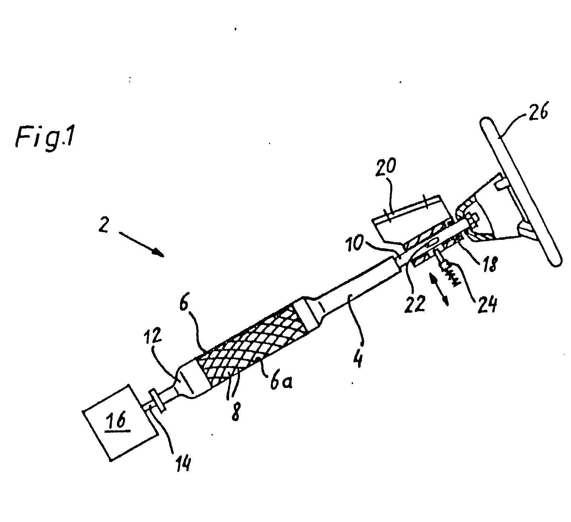

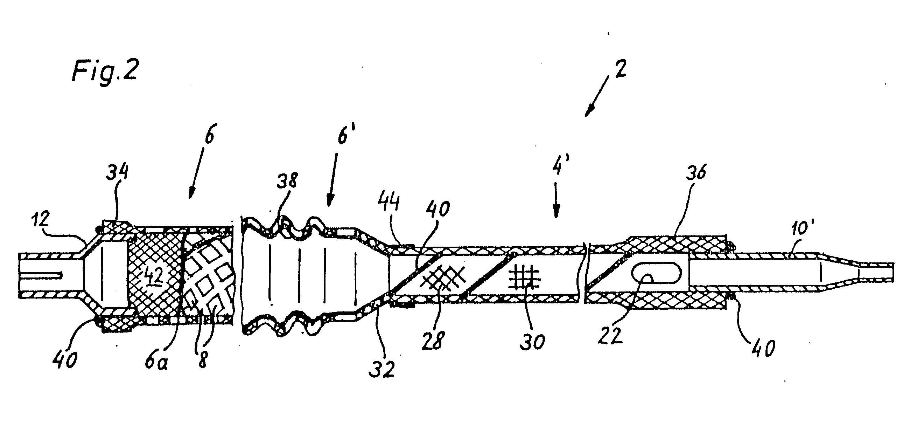

Der nähere Aufbau der Lenksäule 2 ist der Fig. 2 entnehmbar. Abweichend von der Fig. 1 sind jedoch die langlochförmigen Ausnehmungen 22 nicht im Anschlußteil 10, sondern im Lenksäulenabschnitt 4' vorgesehen. Dies hat den Vorteil, daß das Anschlußteil 10 entsprechend dem Anschlußteil 10' verkürzt und damit das Gewicht der Lenksäule 2 weiter verringert werden kann.

Das Rohrteil 6 kann, wie aus Fig. 1 ersichtlich, zylindrisch mit gleichbleibender, lichter Weite oder, wie als Rohrteil 6' in der Fig. 2 gezeigt, zusätzlich wellförmig ausgebildet sein. Die Berge und Täler der wellförmigen Ausbildung verlaufen dabei in Umfangsrichtung des Rohrteiles 5', wodurch aufgrund der vielen radial verlaufenden Wandabschnitte eine begrenzte Biegefähigkeit erzielt wird.

Die einstückige Lenksäule 2 ist im Wickelverfahren hergestellt. Dazu werden auf einem nur zum Teil dargestellten Kern 42 aus Polyurethan-Hartschaum mit einer Außenkontur entsprechend der Innenkontur der Lenksäule 2 — gebildet aus dem glattzylindrischen Rohrteil 6 und dem Lenksäulenabschnitt 4' — in Epoxid-Harz getränkte Glasfasern 28 in einer Wickelrichtung von +/− 45° zur Längsachse der Lenksäule 2 in mehreren Schichten übereinander gewickelt. Zwischendurch ist ein Glasfasergewebe 30 mit 0° und 90° zur Längsachse gerichteten Fasern zur Erhöhung der Biegesteifigkeit des starren Lenksäulenabschnittes 4' eingebunden.

Durch Aufstecken der Anschlußteile 10' und 12 auf den Kern können diese unmittelbar während des Wickelverfahrens mit der Lenksäule 2 verbunden bzw. verklebt werden. Das Anschlußteil 4' ist im Verbindungsbereich durch Rändeln seiner Oberfläche aufgerauht, um zusätzlich eine formschlüssige Verbindung herzustellen.

Beim Aufwickeln der Glasfasern 28 werden diese über die gesamte Lenksäule 2 in der jeweils gewünschten Wandstärke verteilt. Dabei wird der Vorschub der an der Lenksäule 2 entlanggeführten Wickelspule (nicht dargestellt) nach Übersteichen des konischen Übergangsbereiches 32 derart geändert, daß beim Wickeln des Rohrteiles 6 ein Wickelwinkel von +/- 55° und durch entsprechende Abstandswahl die gezeigte Gitterstruktur mit Stegen 6a und Zwischenräumen 8 entsteht. Durch die Wahl des Wickelwinkels kann ein gezieltes Verhältnis zwischen Drehsteifigkeit (normaler Fahrbetrieb) und Axialsteifigkeit (gezielte Nachgiebigkeit bei Frontalkollisionen) des Rohrteiles 6 verwirklicht werden.

Nach Herstellung der gewünschten Wandstärke der Lenksäule 2 werden an den Enden des Rohrteiles 6 bzw. 6' und des Lenksäulenabschnittes 4 bzw. 4' zusätzliche die Wandstärke erhöhende Faserwicklungen 34, 36 aufgebracht, die einen festen Sitz der Anschlußtei 10, 10', 12 sichern. Die Glasfasern sind dabei vornehmlich in Umfangsrichtung aufgebracht. Die Faserwicklung 36 ist derart verbreitert, daß sie auch den Bereich um die Ausnehmungen 22 verstärkt. Als letzte Wicklung werden schraubenförmig elektrisch leitende Kohlenstoffasern 40 aufgebracht, welche durch Herstellung eines Kontaktes mit den Anschlußteilen 10', 12 beispielsweise eine Steuerleitung für ein elektrisches Signalhorn bilden. Ein separat zu montierendes Kabel kann dadurch entfallen. Die Kohlenstoffasern 40 können natürlich auch zwischen den Glasfasern 28 oder als erste Wicklung aufgebracht sein.

Nach der Fertigstellung und Aushärtung der Lenksäule 2 könnte der Kern 42 auf der Zeichnung nach links herausgezogen und das Anschlußteil 12 nach Bestreichen mit einem Kleber eingepreßt werden. Die Verbindungsfläche des Anschlußteiles 12 könnte mit einer achsparallel verlaufenden Feinverzahnung zur Bildung einer in Verdrehrichtung formschlüssigen Verbindung versehen sein. Die Verbindungsflächen könnten jedoch auch leicht konisch ausgebildet und das Anschlußteil 12 mit einer Rändelung versehen sein. Auch das Rohrteil 6 oder 6' könnte zur Abstimmung der axialen Steifigkeit konisch mit dem Lenksäulenabschnitt 4' weg zunehmender lichter Weite gestaltet sein.

Vorzugsweise wird jedoch wie dargestellt der Kern 42 in der Lenksäule belassen, was deren Fertigung erleichtert. Zusätzlich wird durch das Widerstands- und Verformungsverhalten des Kerns 42 unterstützt durch das Rohrteil 6 eine unter Energieverzehrung stattfindende, gezielte Verformung verwirklicht.

Bei einer wellförmigen Ausbildung des Rohrteiles 6' ist ein Kern aus einem dünnwandigen Leichtmetallrohr 38 verwendet, welches sich an seinen nach innen eingezogenen Stirnseiten an einem ausziehbaren Kern (nicht dargestellt) abstützt. Das Leichtmetallrohr 38 verbleibt ebenfalls im Rohrteil 6' und kann ggf. zusätzlich Aufprallenergie bei einer Fahrzeugkollision aufnehmen.

Im mittleren Bereich der Lenksäule 2 ist eine ringförmige Gleitschicht 44 aus PTFE aufgespritzt, die eine unmittelbare Führung der Lenksäule 2 in einem nicht dargestellten, ortfesten Lenkungs-Überrohr ermöglicht. Anstelle einer aufgespritzten Gleitschicht könnte auch ein mit der Lenksäule 2 verklebter oder angewickelter Metallring verwendet sein.

Anstelle eines festen Kernes könnte jedoch auch ein Ausschmelzkern, ein elastisch aufweitbarer Kern oder ein aus mehreren Segmenten zusammengesetzter Kern verwendet werden. Selbstverständlich können auch andere Materialien als die angeführten vorteilhaft sein, beispielsweise Anschlußteile aus Leichtmetall oder Kunststoffasern aus Aramid, Kevlar, Kohlenstoff etc.

## Patentansprüche

1. Sicherheitslenksäule für Kraftfahrzeuge, mit einem starren Lenksäulenabschnitt und einem beim Zusammenstauchen der Lenksäule nachgiebigen, eine Gitterstruktur aufweisenden Rohrteil, sowie mit an beiden Enden befindlichen Anschlußteilen zum krafteinleitenden Anschließen eines Lenkrades und eines Lenkgetriebes, wobei die Anschlußteile separat gefertigt und an dem Rohrteil einerseits und an dem Lenksäulenabschnitt andererseits befestigt sind, dadurch gekennzeichnet, daß das Rohrteil (6, 6') zusammen mit dem starren Lenksäulenabschnitt (4, 4') einstückig aus faserverstärktem Kunststoff gebildet ist.

2. Sicherheitslenksäule nach Anspruch 1, dadurch gekennzeichnet, daß das lenkradseitige Anschlußteil (10, 10') derart ausgebildet ist, daß es auch die lenkradnahe Drehlagerung (Kugellager 18) der Lenksäule (2) und gegebenenfalls Ausnehmungen (22) für eine Lenradsperre aufnimmt.

3. Sicherheitslenksäule nach Anspruch 1, dadurch gekennzeichnet, daß die lichte Weite des im Durchmesser größeren Rohrteiles (6) vom Lenksäulenabschnitt (4, 4') weg nicht abnimmt.

4. Sicherheitslenksäule nach Anspruch 1, dadurch gekennzeichnet, daß das Rohrteil (6') durch im Durchmesser vergrößerte Bereiche mit im wesentlichen radial verlaufenden Wandabschnitten (wellförmige Ausbildung) begrenzt winkelbeweglich ist.

5. Sicherheitslenksäule nach Anspruch 1, dadurch gekennzeichnet, daß zumindest das Rohrteil (6, 6') einen bei einer Deformierung unter Energievernichtung gezielt nachgiebigen Einsatz aufweist.

6. Sicherheitslenksäule nach Anspruch 5, dadurch gekennzeichnet, daß der Einsatz durch den beim Wickeln der Lenksäule (2) verwendeten Kern (42) gebildet ist.

7. Sicherheitslenksäule nach den Ansprüchen 1 und 3, dadurch gekennzeichnet, daß rohrförmige Enden des Rohrteiles (6, 6') und des Lenksäulenabschnittes (4, 4') die Anschlußteile (10, 10', 12) umschließen und daß in diesem Verbindungsbereich zusätzlich Faserwicklungen (34, 36) angeordnet sind.

8. Sicherheitslenksäule nach den Ansprüchen 1 und 2, dadurch gekennzeichnet, daß die Ausnehmungen (22) für die Lenkradsperre im Lenksäulenabschnitt (4') angeordnet sind und daß im Bereich dieser Ausnehmungen zusätzliche Faserwicklungen (36) aufgebracht sind.

9. Sicherheitslenksäule nach Anspruch 1, dadurch gekennzeichnet, daß zumindest eine elektrisch leitende Faser (Kohlenstoffaern 40) mit eingebunden ist, welche die beiden Anschlußteile (10', 12) miteinander verbindet.

10. Sicherheitslenksäule nach Anspruch 1, dadurch gekennzeichnet, daß die Lenksäule (2) an deren Führung oder Lagerung bewirkenden Lagerstellen mit einer Gleitschicht (44) mit einem günstigen Reibungskoeffizienten versehen ist.

**Claims**

1. Safety steering column for motor vehicles, with a rigid steering column portion and with a lattice-structure tubular portion which is yieldable when the steering column is subjected to upsetting forces, and also with connecting portions provided at the two ends for force-transmitting connection to a steering wheel and to a steering gear, the connecting portions being produced separately and secured to the tubular portion on the one hand and to the steering column portion on the other hand, characterised in that the tubular portion (6, 6') is formed integrally with the rigid steering column portion (4, 4') from fibre-reinforced synthetic plastic material.

2. Safety steering column according to claim 1, characterised in that the connecting portion (10, 10') in the steering wheel region is so constructed that it also accommodates the rotary bearing device (ball bearing 18) of the steering column (2) in the steering wheel region and possibly recesses (22) for a steering wheel locking system.

3. Safety steering column according to claim 1, characterised in that the inside width of the larger-diameter tubular portion (6) does not decrease in the direction away from the steering column portion (4, 4').

4. Safety steering column according to claim 1, characterised in that the tubular portion (6') is capable of limited angular movement through increased-diameter regions having substantially radially disposed wall regions (corrugated construction).

5. Safety steering column according to claim 1, characterised in that at least the tubular portion (6, 6') has an insert element which is deliberately yieldable when deformation occurs, with an energy-dissipating effect.

6. Safety steering column according to claim 5, characterised in that the insert element is formed by the core (42) used when the steering column (2) is wound.

7. Safety steering column according to claims 1 and 3, characterised in that tubular ends of the tubular portion (6, 6') and of the steering column portion (4, 4') surround the connecting portions (10, 10', 12), and that in this connecting region fibre coils (34, 36) are additionally arranged.

8. Safety steering column according to claims 1 and 2, characterised in that the recesses (22) for the steering wheel locking system are arranged in the steering column portion (4'), and that additional fibre coils (36) are arranged in the region of these recesses.

9. Safety steering column according to claim 1, characterised in that at least one electrically conductive fibre (carbon fibre 40) is bound-in at the same time, this connecting the two connecting portions (10', 12) to one another.

10. Safety steering column according to claim 1, characterised in that the steering column (2) is provided at its bearing portions which are used for supporting or guiding purposes with a sliding-surface layer (44) having an advantageous coefficient of friction.

## Revendications

1. Colonne de direction de sécurité pour véhicules automobiles, comprenant une partie rigide de colonne de direction et une pièce tubulaire qui présente une structure de treillis et qui peut céder élastiquement en cas d'écrasement de la colonne de direction, ainsi que des éléments de connexion se trouvant aux deux extrémités pour l'assemblage avec transmission de forces d'un volant et d'un mécanisme de direction, ces éléments de connexion étant fabriqués séparément et étant fixés d'une part à la pièce tubulaire et d'autre part à la partie de la colonne de direction, caractérisée en ce que la pièce tubulaire (6, 6') est formée d'une seule pièce avec la partie rigide de la colonne de direction (4, 4') en matière plastique renforcée de fibres.

2. Colonne de direction de sécurité selon la revendication 1, caractérisée en ce que l'élément de connexion (10, 10') du côté volant est réalisé de manière à recevoir également l'organe de montage rotatif voisin du volant (roulement à billes 18) pour la colonne de direction (2) et, le cas échéant, des évidements (22) pour un dispositif de verrouillage du volant.

3. Colonne de direction de sécurité selon la revendication 1, caractérisée en ce que le diamètre intérieur de la pièce tubulaire (6), de diamètre plus grand, ne diminue pas dans le sens de l'éloignement par rapport à la partie (4, 4') de la colonne de direction.

4. Colonne de direction de sécurité selon la revendication 1, caractérisée en ce que la pièce tubulaire (6') peut subir une déformation angulaire limitée, grâce à des régions de diamètre agrandi comportant des segments de paroi qui s'étendent en direction pratiquement radiale (forme ondulée).

5. Colonne de direction de sécurité selon la revendication 1, caractérisée en ce qu'au moins la pièce tubulaire (6, 6') comporte une insertion susceptible de céder élastiquement avec absorption d'énergie en cas de déformation.

6. Colonne de direction de sécurité selon la revendication 5, caractérisée en ce que l'insertion est constituée par le noyau (42) qui est utilisé lors de la fabrication par enroulement de la colonne de direction (2).

7. Colonne de direction de sécurité selon la revendication 1 ou 3, caractérisée en ce que des extrémités tubulaire de la pièce tubulaire (6, 6') et de la partie de colonne de direction (4, 4') entourent les éléments de connexion (10, 10', 12) et en ce qu'il est disposé en plus, dans cette zone d'assemblage, des enroulements de fibres (34, 36).

8. Colonne de direction de sécurité selon la revendication 1 ou 2, caractérisée en ce que les évidements (22) pour le dispositif de verrouillage du volant sont disposés dans la partie de colonne de direction (4') et en ce qu'il est appliqué des enroulements de fibres supplémentaires (36) dans la région de ces évidements.

9. Colonne de direction de sécurité selon la revendication 1, caractérisée en ce qu'il est intégré au moins une fibre électriquement conductrice (fibre de carbone 40) qui relie entre eux les deux éléments de connexion (10', 12).

10. Colonne de direction de sécurité selon la revendication 1, caractérisée en ce que la colonne de direction (2) est munie, au niveau de ses points de montage assurant son guidage ou sa rotation, d'une couche de glissement (44) présentant un coefficient de friction favorable.

Fig.1

0 091 671

Fig.2

2